# FASCICULE DE BREVET EUROPEEN

(11) **EP 3 017 398 B1**
(45) Date de publication et mention de la délivrance du brevet: **21.08.2019**
(21) Numéro de dépôt: 14758595.4
(22) Date de dépôt: 02.07.2014
(51) Int. Cl.: G06K 7/10, G01N 21/90, B07C 5/34, B07C 5/12, G01N 21/88, G06K 7/14

(54) **SYSTEME D'INSPECTION D'UN OBJET AU MOINS TRANSLUCIDE CREUX PRESENTANT AU MOINS UN MARQUAGE**
INSPEKTIONSSYSTEM EINEN GEGENSTAND MINDESTENS TRANSLUCIDE HOHL MIT MINDESTENS EINEM MARKIERUNG
INSPECTION SYSTEM OF AN OBJECT AT LEAST TRANSLUCIDE HOLLOW COMPRISING AT LEAST A MARK

(30) Priorité: 02.07.2013 FR 1356466
(43) Date de publication de la demande: 11.05.2016
(73) Titulaire: Bathelet, Guillaume, 69530 Brignais (FR)
(72) Inventeur: Bathelet, Guillaume, 69530 Brignais (FR)
(74) Mandataire: Jacobacci Coralis Harle
(86) Numéro de dépôt international: PCT/FR2014/051695
(87) Numéro de publication internationale: WO 2015/001255

(56) Documents cités:
- EP-A1- 2 164 028
- DE-C1- 19 905 135
- DE-U1- 29 920 232

## Description

L'invention concerne le domaine technique de l'inspection ou de la lecture d'une marque réalisée dans ou sur un objet transparent ou translucide. Dans une application préférée mais non exclusive, l'invention se rapporte à la lecture de codes bidimensionnels tels que des Datamatrix gravés ou marqués à la surface de récipients ou contenants en verre défilant à grande vitesse dans un système d'inspection en ligne.

La traçabilité dans l'industrie du verre est une contrainte de plus en plus forte. Les articles en verre suivent un processus de fabrication, de distribution et de remplissage de plus en plus complexe avec de nombreux stockages temporaires et ruptures de flux. De plus, la réglementation imposent de disposer d'une capacité de retracer, à travers toutes les étapes de fabrication, de la transformation, de la distribution, le cheminement d'un contenant alimentaire au moyens d'une identification permettant la traçabilité de du contenant. Afin de répondre à cette obligation, l'industrie verrière a développé une technique de marquage à chaud permettant de graver au moyen d'un laser une marque d'identification individuelle et propre à chaque contenant sur une ligne de fabrication sur laquelle les contenants sont produits à des cadences pouvant être comprises entre 50 et 600 articles par minutes. La marque d'indentification se présente par exemple sous la forme d'un Datamatrix. Afin de garantir, l'efficacité d'un tel marquage de traçabilité il convient de s'assurer que le marquage de chaque produit est lisible. A cet effet, il est nécessaire de lire le marquage après son application et refroidissement du contenant à une cadence compatible avec la cadence de production de manière à ne pas créer un point d'accumulation des produits et à pouvoir, d'une part, éliminer au plus tôt les contenants dont le marquage est défectueux et, d'autre part, enregistrer dans une base de données les contenants dont le marquage est opérationnel. Le besoin de lecture à cadence élevée se retrouve également sur les lignes de remplissage notamment.

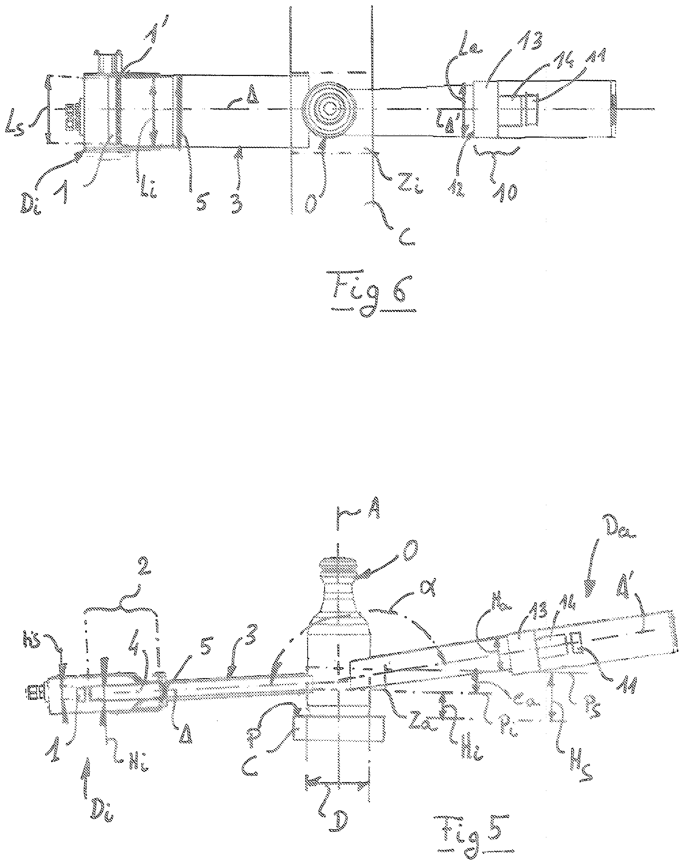

Une demande de brevet EP 2 164028 a proposé un système d'inspection de code inscrit à la surface de récipients en verre destinés à l'industrie pharmaceutique ou chimique. Comme cela ressort des figures 5 et 6 de ce document, il y est mis en oeuvre un système d'éclairage type ponctuel focalisé sur le code à lire de manière à maximiser l'intensité du signal reçu par la caméra. L'inconvénient de ce système optique, est qu'il ne permet pas de compenser la courbure de la surface du verre. En effet si le code se trouve sur le bord de l'article en verre, la lumière sera défléchie sur les coté et échappera au champ de la caméra. Le champ utile de contrôle est donc extrêmement limité au centre du produit. De plus l'intensité du signal reçu sera fonction de la position angulaire du code par rapport à la source et au dispositif d'acquisition. De plus, le système d'éclairage proposé ne permet pas de s'adapter à différents diamètres de produits. Par ailleurs, le système optique présenté à la figure 9a de ce même document est un système optique avec une caméra à objectif simple. Il collecte tous les rayons réfléchis ou incidents dans l'objectif sans distinction.

Ainsi ; le dispositif d'inspection proposé par le document EP 2 164028 permet une lecture de code tel que des codes Datamatrix sur des verres de bonne qualité à destination de la chimie fine ou de la pharmacie qui présente des épaisseurs de parois régulières, des parois lisse et pas d'inclusion ou de défaut de surface. En revanche le dispositif selon EP 2 164 028 n'est pas adapté à la lecture de code à la surface de récipient en verre « grossier » tel que le verre recyclé utilisé pour la fabrication de récipients alimentaires. En effet, les surfaces interne et externe de tel récipient peut présenter de nombreux défauts de forme, répartition de verre, inclusions dans la matrice du verre et de peau susceptible de défléchir le faisceau incident dans l'objectif d'acquisition et générer un signal parasite que le système optique selon EP 2 164 028 ne pourra pas filtrer. De la même manière, des défauts de peau du verre type pli, bouillon, tache de graisse peuvent se superposer au signal à l'intérieur du code et ne seront pas filtrés par le système optique selon EP 2 164 028 rendant le code illisible.

L'invention vise à proposer un système d'acquisition qui est moins voire pas sensible à ces défauts

Afin de répondre à ces besoins, l'invention concerne un système d'inspection d'un objet au moins translucide s'étendant selon un axe vertical A, l'objet présentant au moins un marquage et étant situé dans une zone d'inspection, le système d'inspection comprenant
- au moins un ensemble d'inspection qui comprend
   - un dispositif d'illumination principal placé d'un côté de la zone d'inspection, le dispositif d'illumination comprenant une source de lumière et émettant au moins un faisceau lumineux selon un axe d'illumination Δ,
   - un dispositif d'acquisition situé à l'opposé du dispositif d'illumination par rapport à la zone d'inspection et comprenant une optique d'acquisition ayant un axe optique Δ' d'observation et un capteur d'image optiquement aligné avec l'optique d'acquisition. Selon l'invention, pour chaque ensemble d'inspection, l'optique d'acquisition comprend un objectif d'entrée et un objectif secondaire situé entre l'objectif d'entrée et le capteur d'image, l'objectif d'entrée étant adapté pour conjuguer optiquement la source de lumière et la pupille de l'objectif secondaire dans un plan horizontal, l'axe d'illumination Δ et l'axe optique Δ' d'observation n'étant pas alignés ou coplanaires dans un plan horizontal.

La conjugaison assurée par l'optique d'acquisition, et notamment par l'objectif d'entrée permet d'assurer une uniformité de l'éclairage perçu par le capteur. De plus, l'axe d'illumination et l'axe optique Δ' d'observation n'étant pas alignés, les rayons du faisceau d'illumination sont, principalement, déviés en présence d'un marquage sur l'objet à inspecter dans la zone d'inspection. Une telle inspection par déflectométrie en transmission permet réduire les perturbations induites par les défauts du matériau constitutif de l'objet lors de l'acquisition.

Au sens de l'invention, il convient d'entendre par marquage tout système d'indentification susceptible d'être lu de manière automatisé tel que notamment un ou plusieurs code-barres mono ou bidimensionnel, un code alphanumérique ou encore une combinaison des deux sans que cette liste ne soit limitative ou exhaustive.

Selon une caractéristique de l'invention, pour chaque ensemble d'inspection, le dispositif d'illumination et le dispositif d'acquisition sont adaptés pour qu'en l'absence d'objet à inspecter dans la zone d'inspection, la lumière émise par le dispositif d'illumination n'atteint pas directement le capteur du dispositif d'acquisition. Cette caractéristique vise à garantir que l'ensemble d'inspection travaille en déflectométrie pure.

Selon une autre caractéristique de l'invention, l'axe d'illumination Δ et l'axe optique Δ' forment, en projection dans un plan vertical V, un angle α non plat et compris entre 130° et 180°.

Selon une caractéristique de l'invention, pour chaque ensemble d'inspection, l'axe d'illumination Δ est sensiblement horizontal. Ainsi, les rayons d'illumination possèdent une incidence sensiblement normale à la surface de l'objet à observer dans une partie au moins de la zone d'inspection ce qui permet d'augmenter la quantité de lumière qui traverse l'objet à inspecter pour atteindre le marquage qui se trouve éventuellement sur la face de l'objet située à l'opposé du dispositif d'illumination.

Selon une caractéristique de l'invention, pour chaque ensemble d'inspection, l'axe d'illumination Δ est incliné par rapport à l'horizontale. Cette caractéristique permet de limiter l'influence des défauts présents sur la face de l'objet orientée vers chaque dispositif d'illumination, notamment dans le cas où la paroi de l'objet à inspecter est sensiblement verticale.

Selon une autre caractéristique de l'invention, pour chaque ensemble d'inspection, le dispositif d'illumination correspondant comprend une source de lumière allongée qui émet un faisceau lumineux possédant une forme de pinceau allongé qui s'étend selon une direction sensiblement horizontale. Une telle caractéristique de l'invention permet de n'illuminer que la région, de l'article ou l'objet à inspecter, dans laquelle est supposé se trouver le marquage à lire de sorte que les réflexions et/ou les déflections parasites induites par d'autres régions dudit objet sont limitées autant que faire se peut. Cette caractéristique de l'invention permet en outre de corriger l'incidence de la courbure éventuelle de la surface du récipient portant le code à lire. Selon une variante de l'invention, la source de lumière forme une ligne lumineuse de sorte que la source lumineuse peut être qualifiée de source linéaire. De manière préférée cette source linéaire possède un axe longitudinal horizontal.

Selon une variante de cette caractéristique, pour chaque ensemble d'inspection, la source de lumière allongée correspondante possède une largeur horizontale supérieure à sa hauteur. Selon une forme de mise en oeuvre de l'invention, pour chaque ensemble d'inspection, la largeur de la source de lumière est alors supérieure à la plus grande dimension horizontale de l'objet à inspecter dans la zone d'acquisition. Selon une autre forme de mise en oeuvre de l'invention, la largeur de la source de lumière est inférieure à la plus grande dimension horizontale de l'objet à inspecter dans la zone d'acquisition. La largeur de la source de lumière peut alors être sensiblement égale à la plus grande dimension horizontale de l'objet à inspecter dans la zone d'acquisition à laquelle a été soustraite l'épaisseur des parois de l'objet à inspecter dans la zone d'acquisition.

Dans une forme préférée de mise en oeuvre de l'invention, la longueur de la source linéaire est ajustable de manière à pouvoir être adaptée aux dimensions de l'objet à inspecter.

Selon une caractéristique de l'invention, pour chaque ensemble d'inspection, le dispositif d'illumination principal comprend une optique d'illumination télécentrique de sorte que les rayons du faisceau lumineux sont sensiblement parallèles entre eux dans la zone d'inspection.

Selon une autre caractéristique de l'invention, chaque ensemble d'inspection comprend un dispositif d'illumination secondaire situé du même côté de la zone d'inspection que le dispositif d'acquisition. Un tel dispositif d'illumination secondaire permet d'effectuer une observation en réflexion

Selon une variante de cette caractéristique, pour chaque ensemble d'inspection, le dispositif d'illumination secondaire est placé au dessus du dispositif d'acquisition correspondant. Une telle disposition permet de réduire l'encombrement de chaque ensemble d'inspection.

Selon une forme préférée de réalisation, chaque dispositif d'acquisition est adapté pour observer une zone d'acquisition qui est située entre deux plans d'acquisition horizontaux inférieur Pi et supérieur Ps situés à une hauteur Hi, respectivement Hs, d'un plan de support PS de l'objet à inspecter dans la zone d'inspection et qui possède une épaisseur d'acquisition Ea mesurée verticalement. Le caractère limité de la zone d'acquisition par rapport à l'ensemble de l'objet permet de limiter l'inspection de l'objet à la seule région de ce dernier où le marquage à lire est supposé se situer. L'épaisseur de la zone d'acquisition et sa hauteur sont alors choisies en fonction des dimensions du marquage et de sa position en tenant compte d'une part des tolérances de l'opération de marquage et d'autre part des tolérances de hauteur de l'objet dans la zone d'inspection.

Selon une caractéristique de cette forme préférée de réalisation, le dispositif d'acquisition est situé au-dessus du plan d'acquisition supérieur ou en-dessous du plan d'acquisition inférieur. Un tel montage permet tenir compte de la géométrie de l'article inspecté et de la hauteur de la marque, pour faciliter l'implantation mécanique du système selon l'invention de part et d'autre d'un système de convoyage des objets à inspecter dans la zone d'inspection, en permettant la superposition d'un dispositif d'acquisition et d'un dispositif d'illumination.

Selon une autre caractéristique de la forme préférée de réalisation, l'optique d'acquisition comprend une fenêtre d'entrée de forme rectangulaire dont la hauteur Ha est supérieure ou égale à l'épaisseur d'acquisition Ea et dont la largeur La est inférieure ou égale à la plus grande dimension horizontale des objets à inspecter mesurée dans la zone d'acquisition. Cette caractéristique permet de limiter l'acquisition des rayons lumineux d'illumination susceptibles de passer de part et d'autre de l'objet à inspecter au niveau de la zone d'acquisition.

Selon encore une autre caractéristique de la forme préférée de réalisation, le faisceau lumineux de chaque dispositif d'illumination possède une épaisseur Ei mesurée verticalement supérieure à l'épaisseur d'acquisition Ea. Cette caractéristique permet d'assurer une illumination aussi homogène que possible de la zone d'acquisition.

Selon encore une autre caractéristique de la forme préférée de réalisation, chaque dispositif d'illumination comprend une fenêtre de sortie de forme rectangulaire dont la hauteur Hi est supérieure ou égale à l'épaisseur d'acquisition Ea et dont la largeur Li est supérieure ou égale à la plus grande dimension horizontale des objets à inspecter mesurée dans la zone d'acquisition. Cette caractéristique permet également Cette caractéristique permet également d'assurer une illumination aussi homogène que possible de la zone d'acquisition

Selon une caractéristique de l'invention, chaque dispositif d'illumination comprend un dioptre de sortie convexe qui possède une forme de portion de cylindre de révolution d'axe horizontal. Cette forme du dioptre de sortie permet de définir une source de lumière pseudo télécentrique dans le plan vertical qui possède une épaisseur supérieure ou égale à la hauteur du marquage et par exemple sensiblement égale à la somme de la hauteur du marques, des tolérances de position du marquage sur l'objet et de tolérance de positionnement de l'objet lors de son convoyage dans la zone d'inspection. Cette caractéristique permet en outre d'assurer une uniformité de l'éclairage perçu par le capteur. Le montage ainsi constitué est assimilable à un éclairage de Köhler dans le plan vertical. La hauteur de source est optimisé et devient assimilable au diaphragme de champ, le dioptre convexe de sortie de la source est assimilable au condenseur, l'objectif primaire du système optique est assimilable à l'objectif d'un microscope, l'objectif secondaire du système optique est assimilable à un oculaire.

Selon l'invention, l'optique d'illumination peut également être une optique de type lentille de Fresnel.

Selon une caractéristique de l'invention, les objectifs d'entrée et secondaire du système optique sont adaptés pour obtenir un objectif péricentrique (hypercentrique) ou télécentrique vis à vis de la surface à contrôler généralement courbe dans le plan horizontale de façon à augmenter le champ utile du système, zone de netteté sur la largeur du champ courbe et limiter les aberrations sphérique sur la largeur du champ.

Ainsi selon une caractéristique de l'invention, pour chaque ensemble d'inspection l'objectif d'entrée, l'objectif secondaire ainsi que les distances entre les objectifs et le capteur sont optimisés pour créer un système optique hypercentrique ou télécentrique de façon à optimiser la largeur de champ utile et la profondeur de champ dans le plan horizontal au niveau de la zone d'inspection.

Selon une autre caractéristique de l'invention, pour chaque ensemble d'inspection, l'objectif secondaire de l'optique d'acquisition comprend un diaphragme réglable. La mise en oeuvre d'un tel diaphragme permet de limiter l'acceptante angulaire des faisceaux incidents et de contrôler le contraste obtenu au niveau du dispositif d'acquisition.

Selon une autre caractéristique de l'invention, le système d'inspection comprend au moins quatre ensembles d'inspection disposés de part et d'autre de la zone d'inspection et uniformément répartis sur 360°. Cette caractéristique de l'invention permet d'assurer une bonne couverture de la zone d'acquisition en permettant de garantir que le marquage à lire sera visualisé par au moins un ensemble d'inspection. De manière préférée, le système d'inspection comprend six ensembles d'inspection dont les champs d'acquisition se recouvrent d'une largeur supérieure ou égale à la largeur d'un marquage à lire.

Selon une variante de caractéristique, les ensembles d'inspection sont répartis de manière symétrique de part et d'autre d'une voie de convoyage des objets à inspecter et sont espacés de manière à autoriser le passage des objets à inspecter.

Selon une autre variante de cette caractéristique, chaque dispositif d'illumination d'un ensemble d'inspection est superposé avec un dispositif d'acquisition d'un autre ensemble d'inspection. Cette variante permet d'optimiser l'encombrement du système d'inspection selon l'invention tout en permettant de répartir les ensembles d'inspection de manière symétrique de part et d'autre d'une voie de convoyage des objets à inspecter dans la zone d'inspection.

Selon une autre variante de cette caractéristique, le système d'acquisition comprend des moyens de pilotage des ensembles d'inspection adaptés pour, d'une part, synchroniser le fonctionnement des dispositifs d'illumination et d'acquisition d'un même ensemble d'inspection et, d'autre part, assurer un fonctionnement à des instants différents de chacun des ensembles d'inspection.

Selon encore une autre variante de cette caractéristique, les dispositifs d'illumination sont adaptés pour émettre des éclairs lumineux d'une durée inférieure ou égale à la résolution spatiale du système optique divisé par la vitesse de déplacement des articles sur le convoyeur. Une telle durée d'éclair permet d'effectuer une acquisition d'un objet situé dans la zone d'acquisition sans risque de flouté.

Selon une autre variante de cette caractéristique, les dispositifs d'illumination sont adaptés pour émettre des éclairs lumineux d'une durée inférieure ou égale à à la résolution spatiale du système optique divisé par la vitesse de déplacement des articles sur le convoyeur et à une fréquence supérieure ou égale à la vitesse de déplacement des articles sur le convoyeur divisé par une fraction de la largeur du marquage à analyser de façon à réaliser plusieurs images du même marquage. Ainsi, il devient possible de sélectionner l'image qui présente le meilleur contraste et/ou le moins de défauts, comme par exemple la trace du joint de moule, qui peuvent provoquer des perturbations / reflets dans l'image.

Selon encore une autre variante de cette caractéristique, les dispositifs d'illumination, les dispositifs d'acquisitions ainsi que les moyens de pilotage sont adaptés pour que dans un intervalle de temps inférieur ou égal à la largeur, d'un élément unitaire du marquage à analyser, divisée par la vitesse des articles sur le convoyeur, chacun des ensemble d'inspection ait effectué au moins une acquisition d'un même objet situé dans la zone d'acquisition ou d'inspection.

Selon l'invention, l'unité de commande peut également être adaptée pour assurer un fonctionnement simultané de tous les ensembles d'inspections.

Bien entendu, les différentes caractéristiques, variantes et formes de réalisation du système d'inspection selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un système d'inspection conforme à l'invention.
- La figure 1 est une vue de dessus du système d'inspection selon l'invention.
- La figure 2 est une perspective schématique d'un objet comportant un marquage devant être lu par le système d'inspection selon l'invention.
- La figure 3 est une vue à plus grande échelle du marquage de l'objet illustré à la figure 2.
- La figure 4 est une élévation schématique de deux ensembles d'inspection superposés constitutifs du système illustré à la figure 1.
- La figure 5 est une élévation schématique en vue de côté d'un ensemble d'inspection constitutif du système illustré à la figure 1.
- La figure 6 est une vues de dessus de l'ensemble d'inspection représenté à la figure 5.
Il est à noter que sur ces figures les éléments structurels et/ou fonctionnels communs aux différentes variantes peuvent présenter les mêmes références.

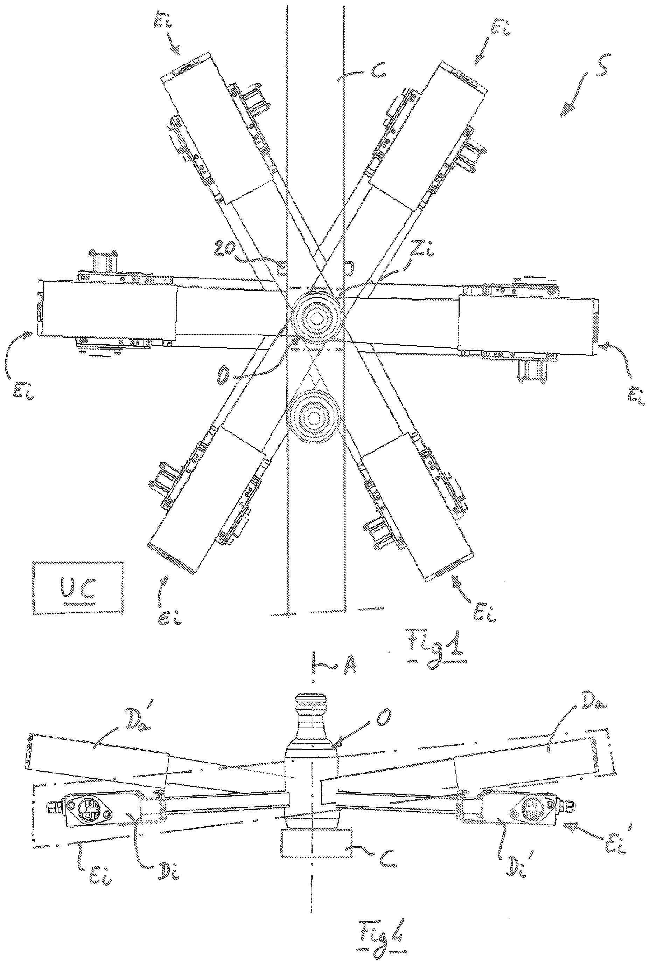

Un système d'inspection selon l'invention, tel qu'illustré à la figure 1 et désigné dans son ensemble par la référence S, est destiné à permettre un contrôle automatisé de marquages présents à la surface d'objets au moins translucide tels que des bouteilles de verre transitant dans une zone d'inspection Zi à des vitesses élevées de l'ordre de 60 mètres / minutes de sorte qu'il passe de l'ordre de 600 objets par minute dans la zone d'inspection. Selon l'exemple illustré, la zone d'inspection Zi correspond à une portion d'un convoyeur C au niveau de laquelle le système d'inspection S est disposé.

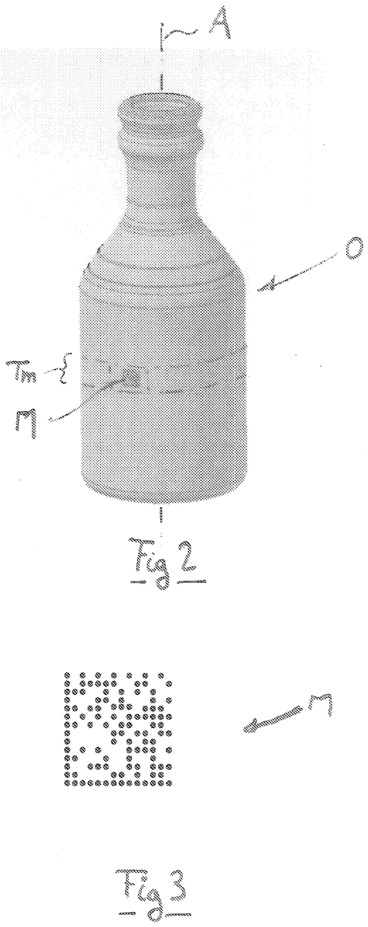

Dans le cas présent et comme le montre la figure 2, chaque objet à inspecter O est formé par une bouteille qui s'étend selon un axe vertical A et qui présente au niveau de son flanc un marquage M par exemple un code-barres bidimensionnelle à haute densité également appelé Datamatrix mieux visible à la figure 3. Le marquage M occupe par exemple une surface carrée de 8 mm de côté. Le marquage M est réalisé au cours du processus de fabrication de l'objet O de sorte qu'il se trouve toujours dans une même région Rm de ce dernier avec une variabilité liée aux tolérances du processus de marquage. Ainsi, la région de marquage Rm s'inscrit dans une tranche Tm de la paroi périphérique de l'objet O. Par ailleurs, la position angulaire de chaque objet sur le convoyeur C n'est pas connue aussi le système d'inspection S est de préférence en mesure de pouvoir inspecter l'intégralité de la tranche Tm lors du passage de chaque objet dans la zone d'inspection Zi. Cette inspection peut être réalisée en appliquant à chaque objet à un mouvement de rotation dans la zone d'acquisition Za. Toutefois, selon l'exemple illustré, le système d'inspection S est conçu de manière à pouvoir inspecter l'intégralité de la surface de la tranche Tm sans appliquer de mouvement de rotation sur lui-même à l'objet O.

A cet effet, le système d'inspection S comprend au moins quatre et selon l'exemple illustré six ensembles d'inspections Ei qui sont disposés de part et d'autre de la zone d'inspection Zi sans faire obstacle au passage des objets à inspecter sur le convoyeur C. Les ensembles d'inspections Ei sont répartis uniformément autour de la zone d'inspection Zi de manière à couvrir les 360° de la tranche Tm.

Chaque ensemble d'inspection Ei comprend un dispositif d'illumination principal Di et un dispositif d'acquisition Da comme cela ressort plus particulièrement de la figure 4 sur laquelle est visible deux ensembles d'inspections Ei et Ei'. Afin d'optimiser l'encombrement du système d'inspection S, le dispositif d'illumination principal Di de l'ensemble d'inspection Ei est superposé avec le dispositif d'acquisition Da' l'autre ensemble d'inspection Ei' de même que le dispositif d'acquisition Da de l'ensemble d'inspection Ei est superposé avec le dispositif d'illumination principal Di' de l'autre ensemble d'inspection Ei'. Il en est ainsi pour les quatre autres ensembles d'inspection, chaque dispositif d'acquisition d'un ensemble d'inspection étant superposé avec un dispositif d'illumination principal d'un autre ensemble d'inspection.

Afin de simplifier la description, les caractéristiques optiques et fonctionnelles des ensembles d'inspections vont être décrites, relation avec les figures 5 et 6, pour le seul ensemble d'inspection Ei. De manière à rendre mieux lisible les figures 5 et 6, seuls y sont représentés le dispositif d'illumination principal Di et le dispositif d'acquisition Da correspondants. Il doit être compris que tous les ensembles d'inspections Ei présentent sensiblement les mêmes caractéristiques fonctionnelles et optiques de sorte que la qualité des images réalisées n'est pas tributaire de la position angulaire de l'objet à inspecter dans la zone d'inspection Zi.

Chaque ensemble d'inspection Ei comprend donc, d'une part, un dispositif d'illumination principal Di qui est placé d'un côté de la zone d'inspection Zi et, d'autre part, un dispositif d'acquisition Da qui est disposé à l'opposé du dispositif d'illumination Di par rapport à la zone d'inspection Zi. Le dispositif d'illumination principal Di et le dispositif d'acquisition Da sont alors raccordés à une unité de commande UC adaptés pour en piloter le fonctionnement.

Le dispositif d'illumination Di comprend une source de lumière 1 associé à une optique d'illumination 2. Selon l'exemple illustré, la source de lumière 1 possède une forme allongée et se trouve formée par un rang horizontal de diodes électroluminescentes 1' de sorte que la source de lumière 1 possède une largeur horizontale Ls supérieure à sa hauteur hs. La largeur Ls de la source de lumière 1 est de préférence supérieure à la plus grande dimension horizontale D de l'objet à inspecter O dans sa tranche Tm. De manière préférée, la longueur de la source de lumière est pilotable de manière à l'adapter au mieux à l'objet à inspecter et à réduire autant que faire se peut l'influence des parois latérales de l'objet à inspecter. Dans la mesure où selon l'exemple illustré la source de lumière est formée par un rang de diodes électroluminescentes elle peut alors qualifiée de pseudo-linéaire. Par ailleurs, afin d'agir sur le contraste obtenu pour la lecture, il est possible de moduler la hauteur hs de la source de lumière. Cette modulation peut notamment être assurée par le choix des diodes électroluminescentes. Selon une variante de l'invention, il est mis en oeuvre entre la source de lumière et l'optique d'illumination une fente réglable en hauteur, ce qui offre la possibilité de régler le contraste du code et l'ajuster en fonction de sa profondeur de marquage jusqu'à la limite du contraste généré par les défauts de peau du verre liée à la rugosité et imperfection de la matrice ou matériau constitutif du récipient. Le réglage de hauteur de la source de lumière est assimilable au diaphragme d'ouverture dans le plan vertical suivant le principe d'éclairage de Köhler. La source de lumière selon l'invention est asymétrique et peut être considérée comme pseudo ponctuelle suivant l'axe vertical et large suivant l'axe l'horizontal.

Selon une variante de réalisation, des diffuseurs holographiques orientés sont ajoutés entre la source de lumière et l'optique d'illumination la source de lumière pour ajuster le contraste suivant les deux axes, vertical et horizontal.

L'optique d'illumination 2 est associée à la source de lumière 1 de manière que le dispositif d'illumination Di émet un faisceau lumineux 3 selon un axe illumination Δ. Le faisceau lumineux 3 présente, en vue de face, une forme de pinceau allongé, de section rectangulaire, s'étendant selon une direction sensiblement horizontale. L'optique d'illumination 2 est de préférence télécentrique ou pseudo-télécentrique de manière que les rayons du faisceau lumineux 3 sont sensiblement parallèles entre eux dans la zone d'inspection Zi et plus particulièrement dans la zone d'acquisition Za qui correspond à une tranche horizontale de la zone d'inspection Zi dans laquelle s'inscrit la tranche Tm de l'objet à inspecter où se situe la marque M à lire ou inspecter. Ce caractère télécentrique ou pseudo-télécentrique résulte notamment du fait que, dans le cas présent, l'optique d'illumination 4 possède un dioptre de sortie 5 convexe qui présente une forme de portion de cylindre de révolution d'axe horizontal.

La zone d'acquisition Za se trouve située entre deux plans d'acquisition horizontaux à savoir un plan d'acquisition inférieur Pi et un plan d'acquisition supérieur Ps qui se situent à une hauteur Hi, respectivement Hs d'un plan de support P ,de l'objet O, défini par le convoyeur C. La zone d'acquisition Za possède alors une épaisseur d'acquisition Ea mesurée verticalement valant la différence entre Hs et Hi. L'épaisseur Ea est supérieure ou égale à l'épaisseur de la tranche Tm et par exemple égale à la somme de l'épaisseur de la tranche Tm et des tolérances de positionnement vertical de l'objet dans la zone d'inspection.

Afin de limiter l'émission de rayons parasites par le dispositif d'illumination Di, ce dernier comprend une fenêtre de sortie 4 de forme rectangulaire dont la hauteur Hi mesurée perpendiculairement à l'axe d'illumination Δ et, dans le cas présent sensiblement verticalement, et supérieure ou égale à l'épaisseur d'acquisition Ea. La largeur Li de la fenêtre de sortie 4 est quant à elle supérieure ou égale à la plus grande dimension D horizontale de l'objet O dans la zone d'acquisition Za ou dans la tranche Tm.

Le faisceau lumineux 3 possède alors une épaisseur Ei sensiblement égale à la hauteur Hi de la fenêtre d'illumination et une largeur Lf sensiblement égale à la largeur Li de la fenêtre d'élimination 4.

La source de lumière 1 est pilotée par l'unité de commande UC et se trouve adaptée pour pouvoir émettre des éclairs lumineux d'une durée comprise entre 10µs et 1000 µs. Une telle durée d'impulsion permet de pas générer de flouté de bougé lorsque que le dispositif d'acquisition possède une résolution spatiale de 10um et que l'objet O se déplace à une vitesse de 60 m/min dans la zone d'inspection. De plus la source de lumière est adaptée pour être en mesure d'émettre les éclairs lumineux à une fréquence supérieure ou égale à 1kHz. En effet dans le cas d'une cadence de 600 articles / minutes, la fréquence de passage des articles dans la zone d'acquisition est de 10Hz. Pour chaque article et pour un marquage de 8 mm, il convient de prévoir au moins 3 éclairs dans le marquage soit d'après le théorème de Shannon au moins 6 périodes et dans la mesure où la vitesse de convoyage est de 60 mètre par minutes, le calcul préconise une fréquence de 750 Hz. Ainsi, la source de lumière peut émettre des éclairs lumineux isolés ou au contraire des séquences d'éclairs.

La longueur d'onde de la lumière émise par la source de lumière 1 est choisie en fonction du matériau constitutif de l'objet O à inspecter et/ou de son contenu. La source de lumière 1 peut présenter une longueur d'onde ou couleur fixe ou au contraire une longueur d'onde ou couleur pilotable par l'unité de commande UC de manière à l'adapter à l'objet à inspecter O et/ou son contenu.

Chaque dispositif d'acquisition Da comprend une optique d'acquisition 10 d'axe optique Δ' et un capteur d'images 11 optiquement aligné avec l'optique acquisition 10. Afin de travailler en déflectométrie, l'axe illumination Δ et l'axe optique Δ' forment un angle obtus non plat compris entre 130° et 180°. De plus, le dispositif d'illumination Di et le dispositif d'acquisition Da correspondant sont disposés de manière qu'en l'absence d'objet O dans la zone d'inspection Zi les rayons du faisceau lumineux 3 n'atteignent pas directement l'optique d'acquisition 10. Dans le cas présent, ce résultat est atteint en plaçant le dispositif d'acquisition Da au-dessus du plan supérieur Ps délimitant la zone d'acquisition Za. Un même résultat pourrait être atteint en plaçant le dispositif d'acquisition Da en dessous du plan inférieur Pi délimitant la zone d'acquisition Za.

Bien entendu, le dispositif d'acquisition Da est adapté pour être sensible à la lumière émise par le dispositif d'illumination Di.

Afin de limiter l'influence des éclairages parasites, l'optique d'acquisition 10 comprend une fenêtre d'entrée 12 de forme rectangulaire dont la hauteur Ha mesurée perpendiculairement à l'axe optique Δ' est supérieur ou égale à l'épaisseur Ea de la zone d'acquisition Za et dont la largeur La est inférieure ou égale à la plus grande dimension horizontale D de l'objet O dans la zone d'acquisition Za. La fenêtre d'entrée se trouve orientée horizontalement de sorte que sa plus grande dimension est sensiblement horizontale. Il doit être noté que selon l'invention le système optique de chaque ensemble d'acquisition est asymétrique dans la mesure où la fenêtre de sortie 4 et la fenêtre d'entrée 12 possèdent chacune une forme rectangulaire dont la plus grande dimension est sensiblement horizontale.

Selon l'exemple illustré, l'optique d'acquisition 10 comprend un objectif d'entrée 13 et un objectif secondaire 14 situé entre l'objectif d'entrée 13 et le capteur d'images 11. Dans le cas présent, l'objectif d'entrée 13 est adapté pour, en projection dans un plan horizontal tel que celui de la figure 6, conjuguer la source de lumière 3 vue au travers de l'optique d'illumination 4 avec la pupille 15 de l'objectif secondaire 14. L'optique d'acquisition peut donc être qualifiée de système ré imageur.

L'objectif d'entrée 13, l'objectif secondaire 14, la distance du capteur d'image 11 et la distance de l'objectif 13 par rapport à la surface de Tm sont adaptés pour réaliser un système optique télecentrique ou hypercentrique pour maximiser la largeur du champ courbe utile et profondeur de champ en fonction du diamètre D.

De manière préférée, l'objectif d'entrée est asymétrique de manière à présenter un facteur de forme sensiblement analogue à la fenêtre d'entrée de sorte que il est plat et qu'il est possible de le superposer avec un dispositif d'illumination.

Chacun des dispositifs d'acquisition Da et d'illumination Di des six ensembles d'inspection Ei sont raccordés à l'unité de commande UC qui est adapté pour en assurer un fonctionnement synchronisé et séquentiel en fonction du passage des objets à inspecter dans la zone d'inspection Zi. Ainsi le système d'inspection comprend une barrière optique 20 qui détecte l'entrée d'un nouvel objet O dans la zone d'inspection Zi.

L'unité de commande UC est alors adaptée pour que chacun des six ensembles d'inspection Ei réalise au moins une image de chaque objet O situé dans la zone d'inspection. L'unité de commande UC assure donc à un fonctionnement séquentiel des ensembles d'inspections Ei de manière que chacun réalise successivement une image de l'objet O, les six images devant être enregistrés dans un temps inférieur au temps de séjour de l'objet dans la zone d'inspection Zi. Pour la réalisation de chaque image, les dispositifs d'illumination Di et d'acquisition Da d'un même ensemble d'inspection Ei ont un fonctionnement synchronisé alors que les autres ensembles d'inspections sont inactifs. Cette manière de procéder garantit une illumination optimale de la zone d'acquisition. Les dispositifs d'acquisition et illumination sont de préférence adaptés pour permettre la réalisation d'une image dans un délai inférieur ou égal à la largeur d'un marquage à analyser divisé par la vitesse de défilement des articles sur le convoyeur.

Compte tenu de la réactivité des dispositifs d'illumination Di et d'acquisition Da, l'unité de commande UC peut être adaptée pour que chacun des ensembles d'inspections Ei en réalise plusieurs images d'un même objet O situé dans la zone d'inspection. Il doit être noté que compte tenu des cadences de prise d'images la position de l'objet peut être considérée comme fixe dans la zone inspection.

Après l'acquisition des images, l'unité de commande UC est adaptée pour traiter ces dernières de manière à y identifier le marquage éventuellement présent et à procéder à sa lecture. En cas de lecture valide l'objet O est enregistré comme étant conforme et en cas de lecture non valide l'unité de commande UC pilote une évacuation de l'objet par un dispositif situé en naval de la zone d'inspection et non représenté aux figures.

Les traitements par l'unité de commande UC des images réalisées par les ensembles d'inspections du système selon l'invention sont effectués au moyen d'algorithmes bien connu de l'homme du métier et ne nécessitant pas de plus ample description.

Selon l'exemple décrit précédemment, l'unité de commande est adaptée pour assurer un fonctionnement séquentiel des ensembles d'inspection Ei, toutefois elle pourrait être adapté pour assurer un fonctionnement simultané des ensembles d'inspection dont les dispositifs d'illumination sont déclenchés à un même instant et dont les dispositifs d'acquisition fonctionnement également sensiblement au même moment. Un tel fonctionnement simultané est rendu possible par la conception optique asymétrique des ensemble d'inspection Ei et par la mise en oeuvres des fenêtres de sortie 4 et d'entrée 12 qui limitent autant que faire se peut les éclairages parasites.

Bien entendu, différentes variantes du système d'inspection selon l'invention peuvent être envisagées dans le cadre des revendications annexées.

## Revendications

1. Système d'inspection (S) d'un objet (O) au moins translucide s'étendant selon un axe vertical (A), l'objet présentant au moins un marquage (M) et étant situé dans une zone d'inspection (Zi), le système d'inspection comprenant
- au moins un ensemble d'inspection (Ei) qui comprend
- un dispositif d'illumination (Di) principal placé d'un côté de la zone d'inspection (Zi), le dispositif d'illumination comprenant une source de lumière (1,1') et émettant au moins un faisceau lumineux (3) selon un axe d'illumination Δ,
- un dispositif d'acquisition (Da) situé à l'opposé du dispositif d'illumination (Di)
par rapport à la zone d'inspection (Zi) et comprenant une optique d'acquisition (10) ayant un axe optique Δ', d'observation et un capteur d'image (11) optiquement aligné avec l'optique d'acquisition (10), l'axe d'illumination Δ et l'axe optique Δ' d'observation n'étant pas alignés ou coplanaires dans un plan horizontal,
**caractérisé en ce que** pour chaque ensemble d'inspection (Ei), l'optique d'acquisition (10) comprend un objectif d'entrée (13) et un objectif secondaire (14) situé entre l'objectif d'entrée (13) et le capteur d'image (11), l'objectif d'entrée (13) étant adapté pour conjuguer optiquement la source de lumière (1,1') et la pupille (15) de l'objectif secondaire (14) dans un plan horizontal.

2. Système d'inspection selon la revendication 1, **caractérisé en ce que**, pour chaque ensemble d'inspection (Ei), l'axe d'illumination Δ est sensiblement horizontal.

3. Système d'inspection selon la revendication 1 ou 2, **caractérisé en ce que** pour chaque ensemble d'inspection (Ei), le dispositif d'illumination (Di) correspondant comprend une source de lumière (1,1') allongée qui émet un faisceau lumineux (3) possédant une forme de pinceau allongé qui s'étend selon une direction sensiblement horizontale.

4. Système d'inspection selon la revendication 3, **caractérisé en ce que**, pour chaque ensemble d'inspection (Ei), la source de lumière (1,1') allongée correspondante possède une largeur horizontale supérieure à sa hauteur, la largeur (Ls) de la source de lumière (1,1') étant supérieure à la plus grande dimension horizontale (D) de l'objet (O) à inspecter.

5. Système d'inspection selon l'une des revendications précédentes, **caractérisé en ce que**, pour chaque ensemble d'inspection (Ei), le dispositif d'illumination (Di) comprend une optique d'illumination (4) télécentrique de sorte que les rayons du faisceau lumineux (3) sont sensiblement parallèles entre eux dans la zone d'inspection (Zi).

6. Système d'inspection selon l'une des revendications précédentes, **caractérisé en ce que** chaque dispositif d'acquisition (Da) est adapté pour observer une zone d'acquisition (Za) qui est située entre deux plans d'acquisition horizontaux inférieur (Pi) et supérieur (Ps) situés à une hauteur (Hi), respectivement (Hs), d'un plan de support (P) de l'objet à inspecter dans la zone d'inspection (Zi) et qui possède une épaisseur d'acquisition (Ea) mesurée verticalement.

7. Système d'inspection selon la revendication 6, **caractérisé en ce que** le dispositif d'acquisition (Da) est situé au-dessus du plan d'acquisition supérieur ou en-dessous du plan d'acquisition inférieur.

8. Système d'inspection selon la revendication 6 ou 7, **caractérisé en ce que** l'optique d'acquisition (10) comprend une fenêtre d'entrée (12) de forme rectangulaire dont la hauteur (Ha) est supérieure ou égale à l'épaisseur d'acquisition (Ea) et dont la largeur (La) est inférieure ou égale à la plus grande dimension horizontale (D) des objets (O) à inspecter mesurée dans la zone d'acquisition (Za).

9. Système d'inspection selon l'une des revendications 6 à 8, **caractérisé en ce que** le faisceau lumineux (3) de chaque dispositif d'illumination (Di) possède une épaisseur (Ei) mesurée verticalement supérieure à l'épaisseur d'acquisition (Ea).

10. Système d'inspection selon l'une des revendications 6 à 9, **caractérisé en ce que** chaque dispositif d'illumination (Di) comprend une fenêtre de sortie de forme rectangulaire dont la hauteur (Hi) est supérieure ou égale à l'épaisseur d'acquisition (Ea) et dont la largeur (Li) est supérieure ou égale à la plus grande dimension horizontale des objets à inspecter mesurée dans la zone d'acquisition (Za).

11. Système d'inspection selon l'une des revendications précédentes, **caractérisé en ce que** chaque dispositif d'illumination (Di) comprend un dioptre de sortie (5) convexe qui possède une forme de portion de cylindre de révolution d'axe horizontal.

12. Système d'inspection selon l'une des revendications précédentes, **caractérisé en ce que** pour chaque ensemble d'inspection l'objectif d'entrée (13), l'objectif secondaire (14) ainsi que les distances entre les objectifs et le capteur sont optimisés pour créer un système optique hypercentrique ou télécentrique de façon à optimiser la largeur de champ utile et la profondeur de champ dans le plan horizontal au niveau de la zone d'inspection.

13. Système d'inspection selon l'une des revendications précédentes, **caractérisé en ce qu'**il comprend au moins quatre ensembles d'inspection (Ei) disposés de part et d'autre de la zone d'inspection (Zi) et uniformément répartis sur 360°.

14. Système d'inspection selon la revendication 13, **caractérisé en ce que** chaque dispositif d'illumination (Di) d'un ensemble d'inspection (Ei) est superposé avec un dispositif d'acquisition (Da) d'un autre ensemble d'inspection (Ei).

15. Système d'inspection selon la revendication 13 ou 14, **caractérisé en ce qu'**il comprend une unité de commande (UC) adaptée pour piloter les ensembles d'inspection (Ei) et pour, d'une part, synchroniser le fonctionnement des dispositifs d'illumination (Di) et d'acquisition (Da) d'un même ensemble d'inspection (Ei) et, d'autre part, assurer un fonctionnement à des instants différents de chacun des ensembles d'inspection (Ei).

## Patentansprüche

1. Inspektionssystem für einen sich entlang einer senkrechten Achse (A) erstreckenden, wenigstens durchscheinenden Gegenstand (O), wobei der Gegenstand wenigstens eine Markierung (M) aufweist und sich in einer Inspektionszone (Zi) befindet,
wobei das Inspektionssystem
- wenigstens ein Inspektionsset (Ei) aufweist, das
- eine auf einer Seite der Inspektionszone (Zi) angeordnete Hauptbeleuchtungsvorrichtung (Di), wobei die Beleuchtungsvorrichtung eine Lichtquelle (1, 1') aufweist und wenigstens einen Lichtstrahl (3) entlang einer Beleuchtungsachse Δ aussendet,
- eine in Bezug auf die Inspektionszone (Zi) der Beleuchtungsvorrichtung (Di) gegenüberliegende und eine Erfassungsoptik (10) mit einer optischen Beobachtungsachse Δ' und einen auf die Erfassungsoptik (10) optisch ausgerichteten Bildsensor (11) aufweisende Erfassungsvorrichtung (Da)
aufweist,
wobei die Beleuchtungsachse Δ und die Beobachtungsachse Δ' nicht aufeinander ausgerichtet oder in einer horizontalen Ebene koplanar sind,
**dadurch gekennzeichnet, daß** die Erfassungsoptik (10) für jedes Inspektionsset (Ei) ein Eingangsobjektiv (13) und ein zwischen dem Eingangsobjektiv (13) und dem Bildsensor (11) gelegenes Sekundärobjektiv (14) aufweist, wobei das Eingangsobjektiv (13) dazu ausgelegt ist, die Lichtquelle (1, 1') und die Pupille (15) des Sekundärobjektivs (14) in einer horizontalen Ebene zu konjugieren.

2. Inspektionssystem gemäß Anspruch 1, **dadurch gekennzeichnet, daß** die Beleuchtungsachse Δ für jedes Inspektionsset (Ei) im Wesentlichen horizontal ist.

3. Inspektionssystem gemäß Anspruch 1 oder 2, **dadurch gekennzeichnet, daß** die entsprechende Beleuchtungsvorrichtung (Di) für jedes Inspektionsset (Ei) eine längliche Lichtquelle (1, 1') aufweist, die einen Lichtstrahl (3) aussendet, der die Form eines länglichen Pinsels aufweist, der sich in einer im Wesentlichen horizontalen Richtung erstreckt.

4. Inspektionssystem gemäß Anspruch 3, **dadurch gekennzeichnet, daß** die entsprechende längliche Lichtquelle (1, 1') für jedes Inspektionsset (Ei) eine horizontale Breite aufweist, die größer als ihre Höhe ist, wobei die Breite (Ls) der Lichtquelle (1, 1') größer als die größte horizontale Abmessung (D) des zu inspizierenden Objekts (O) ist.

5. Inspektionssystem gemäß einem der vorangehenden Ansprüche, **dadurch gekennzeichnet, daß** die Beleuchtungsvorrichtung (Di) für jedes Inspektionsset (Ei) eine telezentrische Beleuchtungsoptik (4) aufweist, damit die Strahlen des Lichtstrahls (3) in der Inspektionszone (Zi) im Wesentlichen zueinander parallel sind.

6. Inspektionssystem gemäß einem der vorangehenden Ansprüche, **dadurch gekennzeichnet, daß** jede Erfassungsvorrichtung (Da) dazu ausgelegt ist, eine Erfassungszone (Za) zu beobachten, die zwischen einer unteren (Pi) und einer oberen (Ps) horizontalen Beobachtungsebene in einer Höhe (Hi) bezw. (Hs) einer Trägerebene (P) des zu inspizierenden Objekts (O) in der Inspektionszone (Zi) gelegen ist und die senkrecht gemessene Erfassungsdicke (Ea) aufweist.

7. Inspektionssystem gemäß Anspruch 6, **dadurch gekennzeichnet, daß** die Erfassungsvorrichtung (Da) oberhalb der oberen Erfassungsebene oder unterhalb der unteren Erfassungsebene gelegen ist.

8. Inspektionssystem gemäß Anspruch 6 oder 7, **dadurch gekennzeichnet, daß** die Erfassungsoptik (10) ein Eingangsfenster (12) von rechteckiger Form aufweist, dessen Höhe (Ha) größer als oder gleich der Erfassungsdicke (Ea) ist und dessen Breite (La) kleiner als oder gleich der größten horizontalen, in der Erfassungszone (Za) gemessenen Abmessung (D) der zu inspizierenden Objekte (O) ist.

9. Inspektionssystem gemäß einem der Ansprüche 6 bis 8, **dadurch gekennzeichnet, daß** der Lichtstrahl (3) jeder Beleuchtungsvorrichtung (Di) eine senkrecht gemessene Dicke (Ei) aufweist, die größer als die Erfassungsdicke (Ea) ist.

10. Inspektionssystem gemäß einem der Ansprüche 6 bis 9, **dadurch gekennzeichnet, daß** jede Beleuchtungsvorrichtung (Di) ein Ausgangsfenster von rechteckiger Form aufweist, dessen Höhe (Hi) größer als oder gleich der Erfassungsdicke (Ea) ist und dessen Breite (Li) größer als oder gleich der größten horizontalen, in der Erfassungszone (Za) gemessenen Abmessung (D) der zu inspizierenden Objekte (O) ist.

11. Inspektionssystem gemäß einem der vorangehenden Ansprüche, **dadurch gekennzeichnet, daß** jede Beleuchtungsvorrichtung (Di) einen konvexen Ausgangsdiopter (5) aufweist, der die Form eines Kreiszylinderabschnitts mit horizontaler Achse aufweist.

12. Inspektionssystem gemäß einem der vorangehenden Ansprüche, **dadurch gekennzeichnet, daß** für jedes Inspektionsset das Eingangsobjektiv (13), das Sekundärobjektiv (14) und die Abstände zwischen den Objektiven du dem Sensor optimiert sind, um ein hyperzentrisches oder telezentrisches optisches System derart zu bilden, daß die Breite des nutzbaren Felds und die Schärfentiefe in der horizontalen Ebene im Bereich der Inspektionszone optimiert werden.

13. Inspektionssystem gemäß einem der vorangehenden Ansprüche, **dadurch gekennzeichnet, daß** es wenigstens vier Inspektionssets (Ei) aufweist, die beiderseits der Inspektionszone (Zi) angeordnet und gleichmäßig über 360° verteilt sind.

14. Inspektionssystem gemäß Anspruch 13, **dadurch gekennzeichnet, daß** jede Beleuchtungsvorrichtung (Di) eines Inspektionssets (Ei) mit einer Erfassungsvorrichtung (Da) eines anderen Inspektionssets (Ei) überlagert ist.

15. Inspektionssystem gemäß Anspruch 13 oder 14, **dadurch gekennzeichnet, daß** es eine Steuerungseinheit (UC) aufweist, die dazu ausgelegt ist, die Inspektionssets (Ei) zu steuern und einerseits den Betrieb der Beleuchtungs- (Di) und Erfassungsvorrichtung (Da) eines selben Inspektionssets (Ei) zu synchronisieren und andererseits einen Betrieb jedes einzelnen der Inspektionssets zu unterschiedlichen Zeiten sicherzustellen.

## Claims

1. System for inspecting (S) an at least translucent object (O) extending along a vertical axis (A), the translucent object (O) having at least one marking (M) and being located in an inspection area (Zi), the system for inspecting comprising
- at least one inspection assembly (Ei) that comprises
-- a main illumination device (Di) positioned on one side of the inspection area (Zi), the main illumination device comprising a light source (1,1') and emitting at least one light beam (3) along an illumination axis (Δ),
-- an acquisition device (Da) positioned opposite the illumination device relative to the inspection area (Zi) and comprising acquisition optics (10) with an optical axis (Δ') of observation and an image sensor (11) optically aligned with the acquisition optics (10), the illumination axis Δ and the observation optical axis Δ' not being aligned or coplanar,
**characterised in that** for each inspection assembly (Ei), the acquisition optics (10) comprise an entry lens (13) and a secondary lens (14) located between the entry lens (13) and the image sensor (11), the entry lens (13) being adapted to optically conjugate, in projection in a horizontal plane, the light source (1,1') with the pupil (15) of the secondary lens (14),.

2. Inspection system according to claim 1, **characterised in that**, for each inspection assembly (Ei), the illumination axis Δ is substantially horizontal.

3. Inspection system according to claim 1 or 2, **characterised in that** for each inspection assembly (Ei), the corresponding illumination device (Di) comprises an elongated light source (1,1') which emits a light beam (3) having an elongated brush shape extending along a substantially horizontal direction.

4. Inspection system according to claim 3, **characterised in that**, for each inspection assembly (Ei), the corresponding elongated light source (1,1') has a horizontal width greater than the height thereof, the width (Ls) of the light source (S) being greater than the largest horizontal dimension (D) of the object (O) to be inspected.

5. Inspection system according to any one of the above claims, **characterised in that**, for each inspection assembly (Ei), the main illumination device (Di) comprises telecentric illumination optics (4) such that the rays of the light beam (3) are substantially parallel with one another in the inspection area (Zi), the entry lens (13) being adapted to optically conjugate, in projection in a horizontal plane, the light source (S) with the pupil (15) of the secondary lens (14).

6. Inspection system according to any one of the above claims, **characterised in that** each acquisition device (Da) is adapted to observe an acquisition area (Za) which is located between two lower (Pi) and upper (Ps) horizontal acquisition planes located at a height (Hi), or (Hs), of a support plane (P) of the object to be inspected in the inspection area (Zi) and which has a vertically measured acquisition thickness (Ea).

7. Inspection system according to claim 6, **characterised in that** the acquisition device (Da) is located above the upper acquisition plane or below the lower acquisition plane.

8. Inspection system according to claim 6 or 7, **characterised in that** the acquisition optics (10) comprise an entry window (12) of rectangular shape wherein the height (Ha) is greater than or equal to the acquisition thickness (Ea) and wherein the width (La) is less than or equal to the largest horizontal dimension (D) of the objects (O) to be inspected measured in the acquisition area (Za).

9. Inspection system according to any one of claims 6 to 8, **characterised in that** the light beam (3) from each illumination device (Di) has a vertically measured thickness (Ei) greater than the acquisition thickness (Ea).

10. Inspection system according to any one of claims 6 to 9, **characterised in that** each illumination device (Di) comprises an exit window of rectangular shape wherein the height (Hi) is greater than or equal to the acquisition thickness (Ea) and wherein the width (Li) is less than or equal to the largest horizontal dimension of the objects to be inspected measured in the acquisition area (Za).

11. Inspection system according to any one of the above claims, **characterised in that** each illumination device (Di) comprises a convex exit dioptre (5) which has a shape of a cylinder portion revolving about a horizontal axis.

12. Inspection system according to any one of the above claims, **characterised in that**, for each inspection assembly, the entry lens (13), the secondary lens (14) and the distances between the lenses and the sensor are optimised to create a hypercentric or telecentric optical system so as to optimise the usable field width and the field depth in the horizontal plane at the inspection area.

13. Inspection system according to any one of the above claims, **characterised in that** it comprises at least four inspection assemblies (Ei) arranged on either side of the inspection area (Zi) and evenly distributed over 360°.

14. Inspection system according to claim 13, **characterised in that** each illumination device (Di) of an inspection assembly (Ei) is superimposed with an acquisition device (Da) with a further inspection assembly (Ei).

15. Inspection system according to claim 13 or 14, **characterised in that** it comprises a control unit (UC) adapted to control the inspection assemblies (Ei) and, on one hand, to synchronise the operation of the illumination (Di) and acquisition (Da) devices of the same inspection assembly (Ei) and, on the other, to ensure operation at different times of each of the inspection assemblies (Ei).
